# EUROPÄISCHE PATENTSCHRIFT

(11) **EP 1 088 015 B1**
(45) Veröffentlichungstag und Bekanntmachung des Hinweises auf die Patenterteilung: **19.03.2003**
(21) Anmeldenummer: 99923601.1
(22) Anmeldetag: 20.05.1999
(51) Int. Cl.: C08G 18/10, C08G 18/75, D01F 6/70

(54) **POLYURETHANHARNSTOFFE, POLYURETHANHARNSTOFFFASERN UND VERFAHREN ZU IHRER HERSTELLUNG**
POLYURETHANE UREAS, POLYURETHANE UREA FIBRES AND METHOD FOR THE PRODUCTION THEREOF
POLYURETHANE-UREES, FIBRES DE POLYURETHANE-UREE ET PROCEDE POUR LEUR PRODUCTION

(30) Priorität: 02.06.1998 DE 19824332; 11.09.1998 DE 19841512
(43) Veröffentlichungstag der Anmeldung: 04.04.2001
(73) Patentinhaber: Bayer Aktiengesellschaft, 51368 Leverkusen (DE)
(72) Erfinder: ZWEERING, Uwe, D-40589 Düsseldorf (DE); ENDESFELDER, Andreas, D-51491 Overath (DE); PUDLEINER, Heinz, D-47800 Krefeld (DE); KORTE, Siegfried, D-51519 Odenthal (DE); GROSS, Thomas, D-42579 Heiligenhaus (DE)
(86) Internationale Anmeldenummer: EP9903460
(87) Internationale Veröffentlichungsnummer: WO99062979

(56) Entgegenhaltungen:
- EP-A- 0 421 215
- EP-A- 0 421 217
- WO-A-97/00982
- WO-A-97/13798

## Beschreibung

Die Erfindung betrifft ein Verfahren zur Herstellung von Polyurethanharnstoffen, neue Polyurethanharnstoffe, ein Verfahren zur Herstellung von Elastanfasern aus Polyurethanharnstoffen und die nach dem Verfahren erhältlichen Elastanfasern. Die Polyurethanharnstoffe werden aus einem aliphatischen oder cycloaliphatischen Diisocyanat, einem polymeren Diol, einem aliphatischen oder cycloaliphatischen Diarnin und ggf. einem sekundären aliphatischen Amin aufgebaut. Die Elastanfasern vereinen hervorragende mechanische Eigenschaften mit guter Lichtechtheit.

Elastane sind mono- oder multifile Endlosfäden, die zu mindestens 85 Gew.-% aus segmentierten Poly(urethan)en bzw. Poly(urethanharnstoff)en bestehen. Die fadenbildenden Polymere weisen eine Segmentstruktur auf, d. h. sie bestehen aus "kristallinen" und "amorphen" Blöcken ("Hartsegmente" und "Weichsegmente"). Die Hartsegmente wirken aufgrund ihrer "Kristallinität" als Fixpunkte des Netzwerks und sind damit maßgebend für die Festigkeit der aus den Polymeren hergestellten Formkörper oder Fasern. Die Weichsegmente hingegen, deren Glastemperatur unterhalb der Gebrauchstemperatur liegen muß, sind für die Elastizität der Elastane maßgebend.

Derartige Elastane werden üblicherweise durch Polyaddition von langkettigen Dihydroxylverbindungen (Makrodiole) mit Diisocyanaten und niedermolekularen Dihydroxyl- oder Diaminoverbindungen als Kettenverlängerern hergestellt. Für hochwertige Elastanfilamente (auch als Spandex bezeichnet) werden durch Kettenverlängerung mit Diaminen gewonnene Poly(urethanhamstoff)e verwendet, weil sie gegenüber den Diol-verlängerten Poly(urethan)en aufgrund einer größeren Zahl von Wasserstoffbrückenbindungen zwischen den Polymerketten einerseits einen hohen Hartsegmentschmelzpunkt sowie andererseits ausgezeichnete mechanisch-elastische Eigenschaften aufweisen. Die Elastanfasern werden üblicherweise durch Verspinnen von Lösungen dieser segmentierten Poly(urethanhamstoff)e in hochpolaren Lösemitteln wie Dimethylformamid und Dimethylacetamid mittels des sogenannten Trockenspinnverfahrens oder des Naßspinnverfahrens oder alternativ unter Verzicht auf ein Spinnlösungsmittel durch Verspinnen aus der Schmelze hergestellt.

Nach dem Stand der Technik haben Elastane, die aus aromatischen Diisocyanaten (insbesondere 4,4'-Diphenylmethandiisocyanat [MDI]), polymeren Diolen sowie Mischungen aus Diaminen und Monoaminen hergestellt werden die breiteste Anwendung gefunden. Diese Materialien haben jedoch den schwerwiegenden Nachteil, daß sie bei Belichtung oder insbesondere UV-Bestrahlung sowie bei Kontakt mit Chlor oder Stickoxiden vergilben und ihre mechanischen Eigenschaften einbüßen. Deshalb werden den handelsüblichen Elastanen auf Basis aromatischer Diisocyanate Lichtund Chlorstabilisatoren zugesetzt, die jedoch nur zeitlich und qualitativ begrenzt wirksam sind und außerdem die Herstellungskosten der Elastane erhöhen.

In der Patentschrift DE 2858773 C2 werden Polyurethane beschrieben, die durch Umsetzung von Makrodiolen eines mittleren Molekulargewichts von 800 bis 4000, 1,4-Cyclohexandiisocyanat, dessen Anteil an Transisomerem mindestens 95% beträgt, und Hydrazin als Kettenverlängerungsmittel erhalten werden. Die nach dem beschriebenen Verfahren erhaltenen Fasern zeigen jedoch für Elastane unbefriedigende Eigenschaften, insbesondere nicht ausreichende mechanische Eigenschaften, z.B. eine mangelnde Feinheitsfestigkeit. Außerdem wird die Kettenverlängerung mit dem toxikologisch bedenklichen Hydrazin durchgeführt. Die erhaltenen Spinnlösungen haben mit 15 Gew.-% einen vergleichsweise niedrigen Feststoffgehalt, was in ökonomischer und ökologischer Hinsicht von Nachteil ist, da die Entfernung und Aufarbeitung der Spinnlösungsmittel sehr aufwendig ist.

In der Offenlegungsschrift DE-A-1 955 725 werden elastomere Blockpolyurethane beschrieben, die aus bifunktionellen, niedrig molekularen Polymerisaten mit endständigen aktiven Wasserstoffatomen (wie z.B. Polyethern), organischen Diisocyanaten und Diaminen als Hauptkomponenten gebildet werden. Als Diisocyanate werden 4,4'-Methylenbiscyclohexyldiisocyanat, 4,4'-Isopropylidenbiscyclohexyldiisocyanat, 4,4'-Oxybiscyclohexyldiisocyanat oder 1,4-Cyclohexyldiisocyanat eingesetzt. Die aus diesen Blockpolyurethanen erhaltenen Elastane zeigen jedoch unbefriedigende mechanische Eigenschaften (insbesondere eine niedrige Feinheitsfestigkeit), was in dem zu geringen Molekulargewicht der erhaltenen Polymere begründet liegen dürfte. Außerdem werden trans,trans-angereicherte cycloaliphatische Diisocyanate bei der Elastanherstellung eingesetzt, deren Herstellung sehr aufwendig ist.

In der britischen Patentschrift GB 1 110 868 werden elastische Polyurethanfasern beschrieben, die unter Verwendung von organischen Diisocyanaten sowie Diaminen mit jeweils 4,4'-Alkylidenbiscyclohexylresten erhalten werden. Die mechanischen Eigenschaften (insbesondere die Feinheitsfestigkeit) dieser Materialien sind jedoch unbefriedigend, außerdem haben die verwendeten Spinnlösungen einen vergleichsweise geringen Feststoffgehalt (max. 26 Gew.-%), was die Verarbeitung nach dem Trockenspinnverfahren unwirtschaftlich macht.

Generell kann gesagt werden, daß Elastanmaterialien auf Basis rein aliphatischer Materialien aufgrund physikochemisch- oder prozeßbedingter Nachteile keinen Einzug in die industrielle Anwendung genommen haben (vergleiche auch: Ullmann's Encyclopedia of Industry Chemistry, A 10, S. 611 (1987)). Einzig der Zusatz von 1,6-Hexandiisocyanat als Spinnviskositätskonfektionierungsmittel bei der Synthese von Elastanfasern, bestehend unter anderem aus aromatischen Diisocyanaten als Hartsegment und Polyestern als Weichsegment, führte bislang zu einem Einsatz von aliphatischen Diisocyanaten (vergleiche auch: Patentschrift US 3.377.308).

Aufgabe dieser Erfindung ist es, ein Verfahren zur Herstellung von Elastanfasern zur Verfügung zu stellen, die sich in ihren mechanischen Eigenschaften auf dem Niveau handelsüblicher Elastane befinden, die unter Verwendung aromatischer Diisocyanate hergestellt wurden, und die ohne Zusatz von Stabilisatoren über eine gute Alterungsbeständigkeit unter dem Einfluß von Licht verfügen und die darüber hinaus eine gute Chlorbeständigkeit sowie hohe Widerstandsfähigkeit gegen Verfärbung durch Gase zeigen.

Des weiteren ist es Aufgabe dieser Erfindung, Elastanmaterialien auf Basis von Isophorondiisocyanat bereitzustellen, die sich ebenfalls in ihren mechanischen Eigenschaften auf dem Niveau handelsüblicher Elastane befinden, die unter Verwendung aromatischer Diisocyanate hergestellt wurden, und die ohne Zusatz von Stabilisatoren über eine gute Alterungsbeständigkeit unter dem Einfluß von Licht verfügen und die darüber hinaus eine gute Chlorbeständigkeit sowie hohe Widerstandsfähigkeit gegen Verfärbung durch Gase zeigen.

Weitere besondere Aufgabe ist es, Elastanfasern bzw. ein Verfahren zur Herstellung von Elastanfasern zur Verfügung zu stellen, die sich durch einen geringen Restdehnungwert der erhaltenen, elastischen Fasern, ein gleichzeitig hohes Dehnungspotential von mindestens 400% sowie eine feinheitsbezogene Festigkeit von über 0,9cN/dtex und HDT-Werte (Heat-Distortion Temperature) von mindestens 170°C auszeichnen.

Diese Aufgabe konnte mit der Ausarbeitung und Bereitstellung des nachstehend näher beschriebenen erfindungsgemäßen Verfahrens gelöst werden.

Es wurde gefunden, daß man über ein mehrstufiges Verfahren Polyurethanharnstoffe mit einem mittleren Molekulargewicht (Gewichtsmittel) von insbesondere 50 000 bis 400 000 (ermittelt über Gelpermeationschromatographie und Vergleich mit Polystyrolstandards) erhalten kann, aus denen sich Elastane herstellen lassen, die die oben beschriebene gewünschte Eigenschaftskombination zeigen. Überraschender Weise erhält man dabei Elastanfasern mit besonders guten mechanischen Eigenschaften und sehr guter thermischer Stabilität, wenn man bei dem Stufenverfahren zur Spinnlösungsherstellung so vorgeht, daß bei der Präpolymerherstellung zunächst nur ein Teil des Diisocyanates mit dem polymeren Diol zur Reaktion gebracht wird und der Rest des Diisocyanates unmittelbar vor der Kettenverlängerung zugesetzt wird. Des weiteren wurde gefunden, daß besonders auf Basis von Isophorondiisocyanat Elastanfasern erhalten werden können, die die oben beschriebene gewünschte Eigenschaftskombination zeigen.

Gegenstand der Erfindung ist ein mehrstufiges Verfahren zur Herstellung von Polyurethanharnstoffen durch Herstellen eines Präpolymeren in Lösung oder in der Schmelze und anschließende Kettenverlängerung des Präpolymers in Lösung oder in der Schmelze, bei dem im ersten Schritt das Präpolymere, (welches auch als "isocyanatgekapptes Glycol" bezeichnet wird, ) aus
A) einem polymeren Diol der allgemeinen Struktur HO-Q-OH,
   wobei Q
   ein Rest:-[(CH₂)ₙO]ₘ- oder -[(CH₂ )ₚCH(CH₃)CH₂O]ₒ-
   worin n für eine Zahl von 2-10, m für eine Zahl von 1-150,
   o für eine Zahl von 1-150 und p für eine Zahl von 0-2 steht,
   ein Polyesterrest hergestellt auf Basis von Adipin-, Sebacin-, Bernstein- oder Dodecandisäure oder Gemischen dieser Säuren mit Diolen der allgemeinen Struktur

   HO-A-OH,

   wobei A für einen Rest: -[(CH₂)ᵣ(CR¹R²)_{q}(CH₂)ₛ]- steht,
   worin r für eine Zahl von 1-5, q für eine Zahl von 0-1,
   s für eine Zahl von 0 bis 5
   und R¹, R² unabhängig voneinander für -H oder -CH₃ steht,
   wobei sowohl Gemische dieser Diole als auch ein einziges Diol eingesetzt werden können,
   ein Polycaprolactonrest, bevorzugt mit einem Molekulargewicht von 500 bis 5000,
   oder einem Polycarbonatrest wie einem Poly(pentan-1,5-carbonat)- oder Poly(hexan-1,6-carbonat)rest, bevorzugt mit einem Molekulargewicht von 500 bis 5000,
   oder einer Mischung aus derartigen polymeren Diolen A) sowie
B) einem aliphatischen oder cycloaliphatischen, insbesondere cycloaliphatischen Diisocyanat wie 1,6-Hexandiisocyanat (HDI), 1,4-Butandiisocyanat (BDI), 1,4-Cyclohexyldiisocyanat (CDI), 4,4'-Dicyclohexylmethandiisocyanat (H₁₂MDI), Isophorondiisocyanat (IPDI), Tetramethylxylylendiisocyanat (TMXDI) oder Dimeryldiisocyanat (DDI) oder Gemischen aus diesen Diisocyanaten
   mit einem NCO : OH-Verhältnis von 1,3 bis 3,0, bevorzugt von 1,5 bis 2,3 entweder in einem Lösungsmittel wie Dimethylformamid (DMF), Dimethylacetamid (DMAc) oder N-Methylpyrrolidin (NMP) oder einem anderen dipolaren, aprotischen Lösungsmittel
   oder in der Schmelze hergestellt wird,
   indem die Komponenten nach Vermischung unter Rühren für die Dauer von 0,5 bis 5 Stunden, bevorzugt von 1 bis 5 Stunden, bei der Verwendung von Lösungsmitteln auf 30°C bis 100°C, bevorzugt von 40°C bis 80°C bzw. bei Durchführung einer Schmelzreaktion auf 60°C bis 200°C, bevorzugt von 80°C bis 150°C erhitzt werden,
   im Anschluß daran in einem zweiten Schritt bei einer Temperatur von 0°C bis 100°C weiteres Diisocyanat B) der Reaktionsmischung (Präpolymer der ersten Stufe aus A) und B)) untergemischt wird, so daß das gesamte Verhältnis NCO : OH (der Einsatzstoffe A und B) von 1,7 bis 6,0 beträgt,
   und in einem dritten Schritt die Kettenverlängerung
   entweder in Gegenwart eines Lösungsmittels wie Dimethylformamid (DMF), Dimethylacetamid (DMAc) oder N-Methylpyrrolidin (NMP) oder anderen dipolaren, aprotischen Lösungsmitteln sowohl batchweise unter Rühren als auch kontinuierlich unter sorgfältiger Durchmischung bei einer Temperatur von -20°C bis 100°C, bevorzugt von 0°C bis 80°C
   oder in der Schmelze bei einer Temperatur von 100°C bis 250°C mit
C) einem aliphatischen oder cycloaliphatischen, insbesondere cycloaliphatischen Diamin aus der Gruppe: Ethylendiamin, 1,2-Propylendiamin, 1,3-Propylendiamin, 1,4-Diaminobutan, 1,5-Diaminopentan, 1,3-Diaminocyclohexan, Diaminomethylcyclohexan, Isophorondiamin oder Mischungen aus derartigen Diaminen und Triaminen wie Diethylentriamin und gegebenenfalls mit
D) einem primären oder sekundären, aliphatischen und/oder cycloaliphatischen Amin wie Diethylamin, Ethanolamin, Di-n-butylamin oder Cyclohexylamin, insbesondere Diethylamin, Ethanolamin, Di-n-butylamin,
   wobei das molare Verhältnis Diarnin zu Amin bezogen auf Aminogruppen von 100 zu 0 bis 100 zu 20, bevorzugt bis 100 zu 10 beträgt, mit einem molarem Aminüberschuß bezogen auf reaktive Isocyanateinheiten von 0 bis 25%, bevorzugt von 0 bis 15%, zur Reaktion gebracht wird.

Bevorzugt ist ein Verfahren, bei dem als polymeres Diol A) eines der allgemeinen Struktur HO-Q-OH eingesetzt wird,
wobei Q
ein Rest: -[(CH₂)ₙO]ₘ- ist
worin n für 4, m für eine Zahl von 10-70 steht.

Bevorzugt ist auch ein Verfahren, bei dem als polymeres Diol A) eines der allgemeinen Struktur HO-Q-OH eingesetzt wird,
wobei Q ein Polyesterrest ist hergestellt auf Basis von Adipin-, Sebacin-, Bernsteinoder Dodecandisäure mit Diolen der allgemeinen Struktur:

HO-A-OH,

wobei A für einen Rest: -[(CH₂)ᵣ(CR¹R²)_{q}(CH₂)ₛ]- steht,
worin r für eine Zahl von 1-5, q für eine Zahl von 0-1 , s für eine Zahl von 0 bis 5
und R¹, R² unabhängig voneinander für -H oder -CH₃ steht.

Die bevorzugten polymeren Diole können auch in beliebiger Mischung eingesetzt werden.

Als aliphatisches oder cycloaliphatisches Diisocyanat B) werden insbesondere 1,4-Butandiisocyanat (BDI), 4,4'-Dicyclohexylmethandiisocyanat (H₁₂MDI), Isophorondiisocyanat (IPDI), oder ein Gemisch aus diesen Diisocyanaten eingesetzt.

Bevorzugt ist auch ein Verfahren, das dadurch gekennzeichnet ist, daß die Zumischung und Umsetzung des weiteren Diisocyanat B) mit der Reaktionsmischung in der zweiten Stufe bei einer Temperatur von 20°C bis 80°C erfolgt, so daß das gesamte Verhältnis NCO : OH von 1,7 bis 5,0 beträgt.

Die Kettenverlängerung in der dritten Stufe wird insbesondere so durchgeführt, daß das molare Verhältnis von Isocyanatstrukturen zu zerewitinoffaktiven Wasserstoffatomen der Amine 1,25 zu 1 bis 1 zu 1,25 beträgt.

Gegenstand der Erfindung sind ebenfalls Polyurethanharnstoffe aufgebaut auf Basis
A) eines polymeren Diols der allgemeinen Struktur HO-Q-OH,
   wobei Q
   ein Rest: -[(CH₂)ₙO]ₘ- oder -[(CH₂ )ₚCH(CH₃)CH₂O]ₒ-
   worin n für eine Zahl von 2-10, m für eine Zahl von 1-150, o für eine Zahl von 1-150 und p für eine Zahl von 0-2 steht,
   ein Polyesterrest hergestellt auf Basis von Adipin-, Sebacin-, Bernstein- und/oder Dodecandisäure mit Diolen der allgemeinen Struktur

   HO-A-OH,

   wobei A für einen Rest: -[(CH₂)ᵣ(CR¹R²)_{q}(CH₂)ₛ]- steht,
   worin r für eine Zahl von 1-5, q für eine Zahl von 0-1,
   s für eine Zahl von 0 bis 5
   und R¹, R² unabhängig voneinander für -H oder -CH₃ steht,
   wobei sowohl Gemische dieser Diole als auch ein einziges Diol eingesetzt werden können,
   ein Polycaprolactonrest
   oder einem Polycarbonatrest wie Poly(pentan-1,5-carbonat)diol, Poly(hexan-1,6-carbonat)diol
   oder einer Mischung aus derartigen polymeren Diolen A) sowie
B) Isophorondiisocyanat (IPDI)
C) einem aliphatischen oder cycloaliphatischen Diamin aus der Gruppe: Ethylendiamin, 1,2-Propylendiamin, 1,3-Propylendiamin, 1,4-Diaminobutan, 1,5-Diaminopentan, 1,3-Diaminocyclohexan, Diaminomethylcyclohexan, Isophorondiamin oder Mischungen aus derartigen Diaminen und Triaminen wie Diethylentriamin, und
D) gegebenenfalls einem primären oder sekundären, aliphatischen und/oder cycloaliphatischen Amin wie Diethylamin, Ethanolamin, Di-n-butylamin sowie Cyclohexylamin.

Weiterer Gegenstand der Erfindung ist ein Verfahren zur Herstellung von Elastanfasern, -fäden oder -filamenten (nachfolgend vereinfacht nur Elastanfäden genannt) durch Verspinnen einer Polyurethanharnstofflösung nach dem Trockenspinnprozeß, dadurch gekennzeichnet, daß eine Spinnlösung enthaltend einen Polyurethanharnstoff erhältlich nach dem erfindungsgemäßen oben genannten Verfahren durch eine Spinndüse in einen Spinnschacht eingebracht wird, das Lösungsmittel bei einer Schachttemperatur von 150°C bis 350°C, bevorzugt von 180°C bis 250°C, und einer Spinngastemperatur von 150°C bis 380°C, bevorzugt von 220°C bis 360°C entfernt wird, die verfestigten Fäden abgezogen, gegebenenfalls verstreckt, gegebenenfalls fixiert, mit einer Avivage versehen und auf Spulen aufgewickelt werden.

Gegenstand der Erfindung ist auch ein Verfahren zur Herstellung von Elastanfasern, -fäden oder -filamenten durch Verspinnen einer Polyurethanharnstofflösung nach dem Naßspinnprozeß in ein Fällbad unter Fadenbildung durch Koagulation, Entfernen des Lösungsmittels im Fällbad, Waschen der gebildeten Fäden, vorzugsweise in Wasser, Trocknen der Fäden, gegebenenfalls Verstrecken, gegebenenfalls Fixieren, Versehen mit einer Avivage und Aufwickeln auf Spulen, dadurch gekennzeichnet, daß eine Spinnlösung enthaltend einen Polyurethanharnstoff erhältlich aus dem erfindungsgemäßen obengenannten Herstellungsverfahren verwendet wird.

Vor dem Verspinnen der Spinnlösung beim Naßspinnen oder Trockenspinnen können der Polyurethanharnstofflösung gegebenenfalls zusätzlich Additive wie: Antistatika, z.B. Salze organischer Säuren oder quartäre Ammoniumsalze, Gleitmittel, z.B. Metallsalze langkettiger Carbonsäuren, insbesondere von Ölsäure, Stearinsäure und Palmitinsäure, besonders bevorzugt Magnesiumstearat, Farbstoffe, Pigmente, z.B. TiO₂ Stabilisatoren oder Färbehilfsmittel zugesetzt werden.

Weiterer Gegenstand der Erfindung ist ein alternatives Schmelzspinnverfahren zur Herstellung von Elastanfasern durch Herstellen einer Polyurethanharnstoffschmelze nach dem Präpolymerverfahren und Verspinnen der erhaltenen Polymerschmelze, dadurch gekennzeichnet, daß die Polyurethanharnstoffschmelze gemäß dem erfindungsgemäßen obengenannten Herstellungsverfahren hergestellt wird, die Polymerschmelze nach ihrer Herstellung direkt versponnen wird, die entstehenden Elastanfasern gekühlt, gegebenenfalls verstreckt, mit einer Avivage versehen und aufgewickelt werden.

In einem bevorzugten Schmelzspinnverfahren zur Herstellung von Elastanfasern wird die nach der Kettenverlängerung erhaltene Polymerschmelze anstelle der direkten Verspinnung zunächst abgekühlt und granuliert und das resultierende Polymergranulat nach Wiederaufschmelzen durch Schmelzspinnen zu Elastanfäden verarbeitet.

Das Ausspinnen der Fäden erfolgt beim Schmelzspinnen insbesondere bei einer Temperatur von 180°C bis 270°C, vorzugsweise bei einer Düsentemperatur von 190 - 250°C. Die entstehenden Filamente werden abgekühlt, z. B. durch Anblasung mit Luft. Die Abzugsgeschwindigkeit der Fäden beträgt insbesondere, abhängig von deren Feinheit (Titer), von 100 m/min. bis 1000 m/min., bevorzugt von 200 m/min, bis 800 m/min..

Bevorzugt ist ein Verfahren, bei dem die Polyurethanharnstoff-Schmelze nach dem Einmischen von Gleitmitteln und von Stabilisatoren ohne weitere Zwischenschritte bei einer Temperatur von 180 - 250°C mehrfädig bei einer Geschwindigkeit von 200 - 1000 m/min. versponnen wird.

Die Filamente werden dann z.B. kontinuierlich, d. h. ohne Zwischenablage, verstreckt. Bevorzugt ist eine Kaltverstreckung bei einer Temperatur von 20 - 50°C bei einem Streckgrad von 1,05 bis 5,0, vorzugsweise von 1,1 - 2,5. Die Filamente werden anschließend nach Durchlaufen einer Relaxationszone und nach Aufbringen einer für Elastane üblichen Präparation bei einer Geschwindigkeit von 200 - 1200 m/min, bevorzugt von 400 - 1000 m/min aufgewickelt.

Die erfindungsgemäßen Spinnverfahren ermöglichen es, elastische Garne in monofiler und multifiler Form herzustellen. Bevorzugt werden beim Schmelzspinnen Monofilamente und beim Naßspinnen bzw. beim Trockenspinnen Multifilamente ersponnen.

Die auf Spulen gewickelten Fäden, die durch das Schmelzspinnverfahren erhalten werden, werden anschließend gegebenenfalls einer thermischen Nachbehandlung (Temperung), insbesondere bei einer Temperatur von 50 - 120°C, bevorzugt von 60 - 100°C für 1 Std. bis 96 Stdn., vorzugsweise für 16 Stdn. bis 48 Stdn. unterworfen.

Diese Temperung kann sowohl im Vakuum wie auch in Luft oder inerten Gasen erfolgen, bevorzugt wird in Luft getempert.

Die Intensität der Temperung richtet sich nach der chemischen und physikalischen Grundstruktur der Fäden sowie nach deren Feinheit (Titer). Die Temperungsbedingungen sind so zu wählen, daß nach einer derartigen Behandlung Spulen mit einem für die Weiterverarbeitung ausreichenden Ablaufverhalten vorliegen.

Die nach dem erfindungsgemäßen Verfahren hergestellten elastischen Fäden, die auch Gegenstand der Erfindung sind, zeichnen sich durch geringe Restdehnung von höchstens 35 %, bevorzugt 5 - 35%, bei einer gleichzeitig hohen Höchstzugkraftdehnung von größer oder gleich 400 %, insbesondere von 400 - 650 % aus. Dabei beobachtet man das für konventionelle Elastane typische Kraft/Dehnungs- und Hystereseverhalten. Feinheitsbezogene Festigkeitswerte > 0,9 cN/dtex werden bei den bevorzugten Fasern überwiegend erreicht. Dies ist eine wesentliche Voraussetzung für die Herstellung von feintitrigen Fäden. Die besonders bevorzugten Elastanfäden weisen einen Titer von 17 - 80 dtex auf.

Insbesondere besitzen die nach dem erfindungsgemäßen Verfahren hergestellten Elastanfasern eine hohe Stabilität gegen thermische Belastung und plastisches Fließen, wie sie in einem HDT (Heat Distortion Temperature)-Wert von über 165°C zum Ausdruck kommt.

Weiterer Gegenstand der Erfindung sind Elastanfäden erhältlich nach einem der erfindungsgemäßen Verfahren.

Die elastischen Filamente können hervorragend allein oder in Kombinationsgarnen zusammen mit anderen Filamenten aus z.B. Polyamid, Wolle, Baumwolle und Polyester beispielsweise mittels Kettwirken, Rund- und Flachstricken zu textilen Waren verarbeitet werden. Neben dem Einsatz in der Beinbekleidung sind die nach dem erfindungsgemäßen Verfahren hergestellten elastischen Fäden aufgrund der hohen thermischen Stabilität ganz besonders für die Anwendung in Gebieten, die eine gezielte Thermofixierbarkeit erfordern, geeignet, wie z. B. Wäsche, Mieder, Sportbekleidung, Oberbekleidung und Bezugsstoffe.

Gegenstand der Erfindung ist auch die Verwendung der erfindungsgemäßen Elastanfäden zur Herstellung von Garnen insbesondere von Kombinationsgarnen mit anderen synthetischen und nicht synthetischen Fäden Fasern oder Filamenten und von textilen Flächengebilden, wie Gestricken, Geweben oder Gewirken.

### Beispiele

### Beispiel 1:

2395 g Polytetramethylenglycol (Hydroxylzahl 56,0) werden über 1 Stunde bei 130°C entgast. Es wird soviel Isophorondiisocyanat zugesetzt, daß das NCO:OH-Verhältnis 1,85 : 1 beträgt. Dann wird 4h bei 130°C gerührt. Danach wird bei 50°C soviel Isophorondiisocyanat zugesetzt, daß das NCO:OH-Verhältnis insgesamt 2,85 : 1 beträgt. Nach Zugabe von 1350 g Dimethylacetamid werden 80% dieser Lösung mit einem Gemisch von 304 g Isophorondiamin und 1,16 g Di-n-butylamin, als 5,2 %ige Dimethylacetamidlösung, versetzt. Es entsteht eine stabile Spinnlösung mit einer Viskosität von ca. 80,0 Pas.

### Beispiel 2:

Die Synthese des Präpolymeren erfolgt, wie im Beispiel 1 gezeigt, jedoch mit 47.000 g Polytetramethylenglycol (Hydroxylzahl 56,0). Über einen Mischer werden pro Minute 3 Teile des Präpolymeren mit 4,5 Teilen Dimethylacetamid verdünnt und kontinuierlich zu 2,5 Teilen einer Lösung bestehend aus 34,92 g Isophorondiamin und 0,135 g Di-n-butylamin, gelöst als 14 %ige Lösung in Dimethylacetamid, zudosiert. Es entsteht eine stabile Spinnlösung mit einer Viskosität von ca. 76,0 Pas.

### Beispiel 3:

Die Synthese des Präpolymeren erfolgt, wie unter Beispiel 1 beschrieben, mit dem Unterschied, daß anstelle des Polytetramethylenglycols mit der Hydroxylzahl 56,0 die entsprechende Menge eines Polytetramethylenglycols mit der Hydroxylzahl 39,3 eingesetzt wird. 75,5 Gew.-% der mit Dimethylacetamid verdünnten Prepolymerlösung werden in eine 6,8 %ige Suspension von 256,3 g Isophorondiamin, 0,98 g Di-n-butylamin und 151 g CO₂ in Dimethylacetamid gegossen und solange gerührt bis kein weiterer Viskositätsaufbau mehr stattfindet. Es entsteht eine stabile Spinnlösung mit einer Viskosität von ca. 87,3 Pas.

### Beispiel 4:

Die Synthese des Präpolymeren erfolgt, wie unter Beispiel 1 beschrieben, mit dem Unterschied, daß anstelle des Polytetramethylenglycols mit der Hydroxylzahl 56,0 die entsprechende Menge eines Polyesters hergestellt aus Adipinsäure, 1,6-Hexandiol, 1,4-Butandiol und Neopentylglycol mit der Hydroxylzahl 33,9 zum Einsatz kommt. Das NCO:OH-Verhältnis beträgt 2,2 : 1. Die Reaktionszeit liegt bei 105 min. Danach wird bei 50°C soviel Isophorondiisocyanat zugesetzt, daß das NCO:OH-Verhältnis insgesamt 3,2 : 1 beträgt. 75,4 Gew.-% der mit 1452 g Dimethylacetamid verdünnten Prepolymerlösung werden in eine 6,75 %ige Suspension von 258,5 g Isophorondiamin, 0,49 g Di-n-butylamin und 137 g CO₂ in Dimethylacetamid gegossen und solange gerührt, bis kein weiterer Viskositätsaufbau mehr stattfindet. Es entsteht eine stabile Spinnlösung mit einer Viskosität von ca. 77,0 Pas.

### Beispiel 5:

Die Synthese des Präpolymeren erfolgt, wie unter Beispiel 4 beschrieben, mit dem Unterschied, daß als Makrodiol ein Gemisch eines Polyesters hergestellt aus Adipinsäure, 1,6-Hexandiol, 1,4-Butandiol und Neopentylglycol mit der Hydroxylzahl 33,9 und eines Polytetramethylenglycols mit der Hydroxylzahl 56,0 im Verhältnis 7 zu 3 zum Einsatz kommt. Das NCO:OH-Verhältnis beträgt 2,2 : 1. Die Reaktionszeit liegt bei 180 min. Danach wird bei 50°C soviel Isophorondiisocyanat zugesetzt, daß das NCO:OH-Verhältnis insgesamt 3,2 : 1 beträgt. 66,7 % der mit 1642 g Dimethylacetamid verdünnten Prepolymerlösung werden in eine 7,40 %ige Suspension von 289,8 g Isophorondiamin, 0,55 g Di-n-butylamin und 153 g CO₂ in Dimethylacetamid gegossen und solange gerührt, bis kein weiterer Viskositätsaufbau mehr stattfindet. Es entsteht eine stabile Spinnlösung mit einer Viskosität von ca. 76,0 Pas.

### Vergleichsbeispiel 1:

Die Synthese des Präpolymeren erfolgt, wie im Beispiel 2 jedoch mit 4,4'-Methylendiphenyldiisocyanat anstelle von Isophorondiisocyanat. Das NCO:OH-Verhältnis liegt bei 1,65 : 1. Die Reaktionszeit beträgt 4 h bei 80 °C. Es entsteht nach Kettenverlängerung mit Ethylendiamin eine Spinnlösung mit einer Viskosität von ca. 100 Pas.

### Vergleichsbeispiel 2:

Synthese des Präpolymeren wie im Vergleichsbeispiel 1 jedoch mit einem Polyester hergestellt auf Basis von Adipinsäure, 1,6-Hexandiol und Neopentylglycol mit einer Hydroxylzahl von 56 anstelle des Polytetramethylenglycols. Es entsteht nach Kettenverlängerung mit Ethylendiamin eine stabile Spinnlösung mit einer Viskosität von ca. 80,0 Pas.

Beschreibung der nachfolgend verwendeten Testmethoden:
- Belichtung entsprechend DIN 54004
- NOx entsprechend DIN 54025

Mit den nach den vorstehenden Beispielen hergestellten Spinnlösungen wurden Spinnversuche an einer Trockenspinnanlage gemacht. Der Trockenspinnschacht hat eine insgesamte Länge von 5300mm und einen Durchmesser von 270mm. Die Aufwickeleinheit besteht aus einem Wickler der Firma IWKA, mit zwei separaten Galetten, die sowohl mit Verzug- als auch mit Relaxfahrweise betrieben werden können. Die eigentliche Spuleinheit kann bis zu Geschwindigkeiten von 1200m/min gehandhabt werden. Mit Hilfe dieser Trockenspinneinheit ist ein mehrfädiges Verspinnen von Mono- sowie von Multifilamenten möglich.

Die Herstellbedingungen zum Trockenspinnen der Elastanfasern sind in Tabelle 1 wiedergegeben.

**Tabelle 1:**

| Tabellarische Übersicht Spinnbedingungen: | | | | | |
|---|---|---|---|---|---|
| | **Temperaturen [°C]** | | **Geschwindigkeit [m/min]** | | |
| **Beispiel- nummer** | **Schacht** | **Spinngas** | **Galette1** | **Galette2** | **Aufwickeleinheit** |
| **1** | 250 | 350 | 670 | 780 | 800 |
| **2** | 250 | 350 | 670 | 780 | 800 |
| **3** | 250 | 350 | 670 | 780 | 800 |
| **4** | 250 | 350 | 670 | 780 | 800 |
| **5** | 250 | 350 | 670 | 780 | 800 |
| **V1** | 230 | 270 | 670 | 780 | 800 |
| **V2** | 210 | 250 | 370 | 410 | 420 |
| Wickler der Firma IWKA, Typ S200 VE | | | | | |
| Schachtlänge: 5,3m; Gasdurchsatz 30m²/h | | | | | |

Die so erhaltenen Filamente wurden gemäß ihrer mechanischen und thermischen Eigenschaften untersucht und charakterisiert. Hierzu wurden vor allem die Feinheitsfestigkeiten (FF) und Höchstzugkraftdehnungen (HZKD) in Anlehnung an die DIN 53834 Teil 1 vermessen. Zu diesem Zweck wurden Zugversuche an den Elastan-Filamentgarnen im klimatisierten Zustand durchgeführt. Der vorbereitete Prüfling wird dazu in einer Schlinge um den Haken des Meßkopfes und um eine 10 mm Umschlingungsklemme mit einer Vorspannkraft von 0,001 cN/dtex gelegt. Die Einspannlänge beträgt insgesamt 200mm. Ein aus Alufolie bestehendes Fähnchen wird genau auf Höhe einer Lichtschranke eingehängt. Der Schlitten fährt mit einer Verformungsgeschwindigkeit von 400%/min (800mm Abzug) bis zum Bruch des Fadens und nach der Messung wieder in seine Ausgangsstellung zurück. Pro Prüfling werden 20 Messungen durchgeführt. Desweiteren wurde durch Verwendung eines Thermomechanical-Analyzer (TMA) die Heat-Distortion-Temperature (HDT) ermittelt. Hierbei bestimmt man das Längungsverhalten eines unter einer geringen Vorlast (0,2 mg/dtex) stehenden Elastomerfadens (100 mm) bei kontinuierlicher Steigerung der Temperatur (20°C/min). Oberhalb einer bestimmten Temperatur (HDT) findet eine Längung des Fadens ohne weiteren Temperaturanstieg statt. Zur Ermittlung der HDT werden an die entsprechenden Kurven 45° Tangenten angelegt. Je höher die resultierende HDT ist, umso stärker sind die korrespondierenden Wechselwirkungen der Hartsegmente. Die Tabelle 2 zeigt die ermittelten Filamenteigenschaften.

**Tabelle 2:**

| Tabellarischer Vergleich der Fadendaten: | | | | |
|---|---|---|---|---|
| **Beispiel- nummer** | **Titer** **dtex** | **FF** **cN/dtex** | **HZKD** **%** | **HDT** **°C** |
| **1** | 44,9 | 1,01 | 432 | 183 |
| **2** | 44,5 | 0,99 | 428 | 185 |
| **3** | 47,0 | 1,01 | 579 | 169 |
| **4** | 47,2 | 0,91 | 435 | 184 |
| **5** | 46,8 | 0,96 | 424 | 181 |
| **V1** | 45,9 | 0,81 | 516 | 187 |
| **V2*** | 49,6 | 1,18 | 461 | 171 |

| | | | | |
|---|---|---|---|---|
| FF: Feinheitsfestigkeit; HZKD: Höchstzugkraftdehnung; HDT: Heatdistortiontemperature Fasern bei 800m/min Aufwickelgeschwindigkeit erhalten *Fasern bei 420m/min Aufwickelgeschwindigkeit erhalten | | | | |

Durch den Trockenspinnprozeß wurden Multifilamente erstellt mit einem durchschnittlichen Titer von 45dtex. Es zeigt sich, daß insbesondere unter Verwendung von Polyethern mit höheren Molekulargewichten (M=2900) sehr gute mechanische Filamenteigenschaften resultieren, die teilweise sogar besser sind als die der unter gleichen Bedingungen erstellten Standardsysteme, bestehend aus 4,4'-Methylendiphenyldiisocyanat und Polyethern mit Molekulargewichten von M=2000 (V1). Die thermischen Daten dieser Standardsysteme werden vor allem durch die Verwendung von Polyethern mit Molekulargewichten von M=2000 erreicht. Man ist nunmehr in der Lage, auf einfache Art durch die oben beschriebenen Verfahren Polyurethanharnstoff-Elastane auf Basis von reinaliphatischen Bausteinen zu synthetisieren, die verglichen mit konventionellen Systemen vergleichbare oder teilweise sogar überlegene Filamenteigenschaften aufweisen.

Des weiteren wurden die erhaltenen Fasermaterialien hinsichtlich ihrer Licht- und Schadstoffgasechtheit (insbesondere NOₓ) sowie auf ihre Weißgrade untersucht. Die Prüfungen erfolgten gemäß der ISO 105-B02 (Lichtechtheit) bzw. entsprechend der ISO 105-G01 (NOₓ-Echtheit) sowie im Hinblick auf die Weißgrade nach Datacolor 3890. Die Fasermaterialien wurden dazu zu einem Strickstrumpf verarbeitet und entweder als unbehandelte Rohware oder nach einer sauren oder basischen Bleiche den jeweiligen Echtheitstests bzw. Weißgraduntersuchungen unterworfen. Die Tabelle 3 erläutert die Zusammensetzung der Bleichrezepturen:

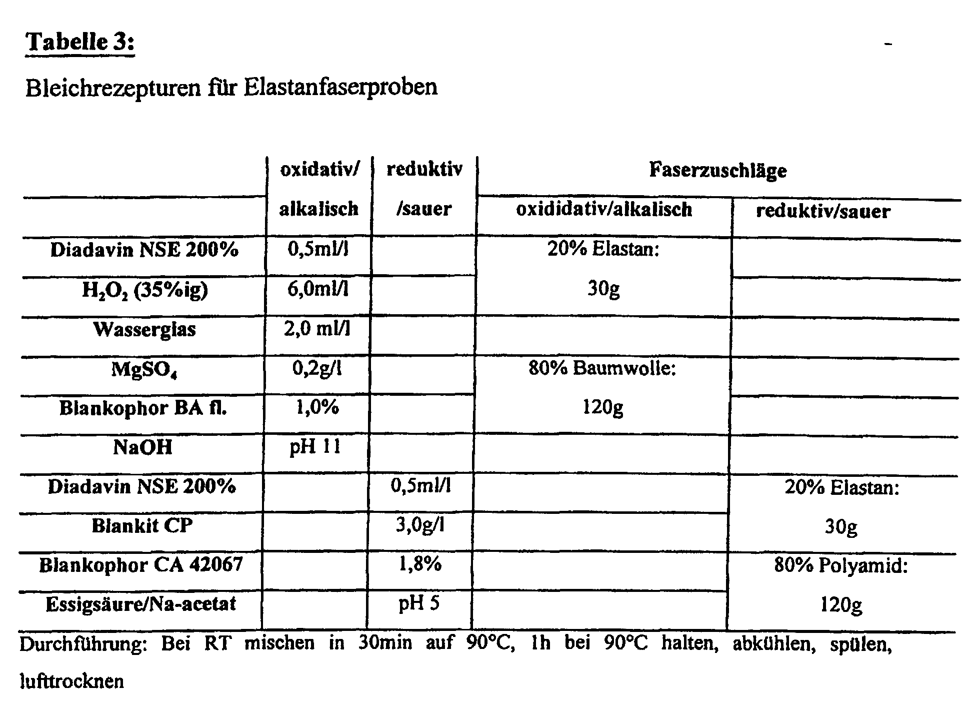

Die Tabelle 4 und 5 liefern die Echtheiten bzw. Weißgrade der behandelten Elastanmaterialien.

**Tabelle 4:**

| Tabellarischer Vergleich der Licht- und NOₓ-Echtheiten: | | | | | | | | | |
|---|---|---|---|---|---|---|---|---|---|
| **Proben- Nr.** | **Rohware** | | | **nach oxidativ/alkalischer Bleiche** | | | **nach reduktiv/saurer Bleiche** | | |
| | **Licht** | **1xNO**_{**x**} | **3xNO**_{**x**} | **Licht** | **1xNO**_{**x**} | **3xNO**_{**x**} | **Licht** | **1xNO**_{**x**} | **3xNO**_{**x**} |
| **1a** | 5 | 3 | 2-3 | 5-6 | 2-3 | 2-3 | 5 | 3 | 2-3 |
| **1b** | 5-6 | 2-3 | 2-3 | 5-6 | 3-4 | 3 | 5 | 4-5 | 3-4 |
| **5a** | 5-6 | 3 | 2-3 | 5-6 | 2-3 | 1-2 | 5-6 | 2-3 | 2 |
| **5b** | 5-6 | 2-3 | 2 | 5 | 2-3 | 2 | 4 | 3 | 2-3 |
| **V1** | 3 | 2-3 | 2 | 2-3 | 2 | 1 | 2 | 1-2 | 1 |
| **V2** | 5 | 3 | 2-3 | 4 | 2 | 1-2 | 4 | 1-2 | 1 |
| 1a und 5a ohne Stabilisatoren; 1b,5b, V1 und V2 mit 1 Gew% Cyanox 1790 als Stabilisator (bezogen auf Gesamtfeststoff) | | | | | | | | | |

Angegeben ist die Prüfnote der visuellen Farbprüfung mit einer Notenscala von 1 (schlecht) bis 6 (sehr gut).

**Tabelle 5:**

| Tabellarischer Vergleich der Weißgrad Berger-Daten nach Datacolor 3890: | | | | | | | | | |
|---|---|---|---|---|---|---|---|---|---|
| **Proben- Nr.** | **Rohware** | | | **nach oxidativ/alkalischer Bleiche** | | | **nach reduktiv/saurer Bleiche** | | |
| | **unbeh.** | **Licht** | **3xNO**_{**x**} | **unbeh.** | **Licht** | **3xNO**_{**x**} | **unbeh.** | **Licht** | **3xNO**_{**x**} |
| **1a** | 82,1 | 56,4 | 60,8 | 67,2 | 54,2 | 48,4 | 95,3 | 67,8 | 70,6 |
| **1b** | 74,2 | 56,7 | 54,9 | 62,3 | 50,4 | 49,2 | 86,9 | 62,2 | 78,4 |
| **5a** | 85,0 | 74,3 | 62,3 | 72,8 | 54,2 | 40,9 | 114,9 | 101,6 | 85,4 |
| **5b** | 74,8 | 60,6 | 44,9 | 68,6 | 42,1 | 43,7 | 111,5 | 72,3 | 85,6 |
| **V1** | 83,4 | 63,7 | 58,0 | 81,3 | 43,9 | 38,5 | 86,5 | 45,6 | -17,6 |
| **V2** | 62,7 | 17,3 | 29,1 | 59,2 | 0,7 | 4,6 | 77,7 | 1,9 | 16,1 |
| 1a und 5a ohne Stabilisatoren; 1b,5b, V1 und V2 mit 1Gew% Cyanox 1790 als Stabilisator (bezogen auf Gesamtfeststoff) | | | | | | | | | |

Es zeigt sich eindeutig, daß die reinaliphatischen Materialien, die gemäß der Erfindung hergestellt und geprüft wurden, sowohl in Bezug auf ihre Echtheiten nach Behandlung mit Licht bzw. NOₓ-Gas als auch im Hinblick auf ihre Weißgrade erheblich beständiger sind als die Vergleichssysteme auf Basis aromatischer Diisocyanate. Diese Effekte werden vor allem bei einem Vergleich der Daten der Tabelle 4 und 5 nach Durchführung der Bleichungen insbesondere der reduktiv/sauren Bleiche deutlich. Die Elastanmaterialien, die gemäß der Erfindung hergestellt wurden, liefern unabhängig von der jeweiligen Vorbehandlungen (Bleiche) nach den Licht- bzw. Schadstoffgastests ähnlich gute Werte. Besonders interessant scheint der Befund, daß diese hervorragenden Stabilitäten dieser nach der vorliegenden Erfindung erstellten Filamentmaterialien, auch ohne Zusatz einer Stabilisatorsubstanz wie z.B. Cyanox 1790 erzielt werden können.

Man stellt demnach fest, daß Elastanmaterialien, die gemäß der vorliegenden Erfindung auf der Basis reinaliphatischer Bausteine hergestellt worden sind, neben guten bis sehr guten Fadeneigenschaften auch erhöhte Beständigkeiten gegenüber Schadstoffgasen und Licht im Vergleich zu konventionellen, aromatischen Elastan-Systemen aufweisen, so daß die Aufgabe der Erfindung, derartige Materialien zur Verfügung zu stellen, im vollem Umfang erreicht worden ist.

## Patentansprüche

1. Mehrstufiges Verfahren zur Herstellung von Polyurethanharnstoffen durch Herstellen eines Präpolymeren in Lösung oder in der Schmelze und anschließende Kettenverlängerung des Präpolymers in Lösung oder in der Schmelze, bei dem im ersten Schritt das Präpolymere, (welches auch als "isocyanatgekapptes Glycol" bezeichnet wird, ) aus
A) einem polymeren Diol der allgemeinen Struktur HO-Q-OH,
wobei Q
ein Rest: -[(CH₂)ₙO]ₘ- oder -[(CH₂ )ₚCH(CH₃)CH₂O]ₒ-
worin n für eine Zahl von 2-10, m für eine Zahl von 1-150,
o für eine Zahl von 1-150 und p für eine Zahl von 0-2 steht,
ein Polyesterrest hergestellt auf Basis von Adipin-, Sebacin-, Bernstein- oder Dodecandisäure oder Gemischen dieser Säuren mit Diolen der allgemeinen Struktur
HO-A-OH,
wobei A für einen Rest: -[(CH₂)ᵣ(CR¹R²)_{q}(CH₂)ₛ]- steht,
worin r für eine Zahl von 1-5, q für eine Zahl von 0-1,
s für eine Zahl von 0 bis 5
und R¹, R² unabhängig voneinander für -H oder -CH₃ steht,
wobei sowohl Gemische dieser Diole als auch ein einziges Diol eingesetzt werden können,
ein Polycaprolactonrest, bevorzugt mit einem Molekulargewicht von 500 bis 5000,
oder einem Polycarbonatrest wie einem Poly(pentan-1,5-carbonat)-oder Poly(hexan-1,6-carbonat)rest, bevorzugt mit einem Molekulargewicht von 500 bis 5000,
oder einer Mischung aus derartigen polymeren Diolen A) sowie
B) einem aliphatischen oder cycloaliphatischen, insbesondere cycloaliphatischen Diisocyanat wie 1,6-Hexandiisocyanat (HDI), 1,4-Butandiisocyanat (BDI), 1,4-Cyclohexyldiisocyanat (CDI), 4,4'-Dicyclohexylmethandiisocyanat (H₁₂MDI), Isophorondiisocyanat (IPDI), Tetramethylxylylendiisocyanat (TMXDI) oder Dimeryldiisocyanat (DDI) oder Gemischen aus diesen Diisocyanaten
mit einem NCO : OH-Verhältnis von 1,3 bis 3,0, bevorzugt von 1,5 bis 2,3
entweder in einem Lösungsmittel wie Dimethylformamid (DMF), Dimethylacetamid (DMAc) oder N-Methylpyrrolidin (NMP) oder einem anderen dipolaren aprotischen Lösungsmittel
oder in der Schmelze hergestellt wird,
indem die Komponenten nach Vermischung unter Rühren für die Dauer von 0,5 bis 5 Stunden, bevorzugt von 1 bis 5 Stunden, bei der Verwendung von Lösungsmitteln auf 30°C bis 100°C, bevorzugt von 40°C bis 80°C bzw. bei Durchführung einer Schmelzreaktion auf 60°C bis 200°C, bevorzugt von 80°C bis 150°C erhitzt werden,
im Anschluß daran in einem zweiten Schritt bei einer Temperatur von 0°C bis 100°C weiteres Diisocyanat B) der Reaktionsmischung untergemischt wird, so daß das gesamte Verhältnis NCO : OH von 1,7 bis 6,0 beträgt,
und in einem dritten Schritt die Kettenverlängerung
entweder in Gegenwart eines Lösungsmittels wie Dimethylformamid (DMF), Dimethylacetamid (DMAc) oder N-Methylpyrrolidin (NMP) oder anderen dipolaren aprotischen Lösungsmitteln sowohl batchweise unter Rühren als auch kontinuierlich unter sorgfältiger Durchmischung bei einer Temperatur von -20°C bis 100°C, bevorzugt von 0°C bis 80°C
oder in der Schmelze bei einer Temperatur von 100°C bis 250°C mit
C) einem aliphatischen oder cycloaliphatischen, insbesondere cycloaliphatischen Diamin aus der Gruppe: Ethylendiamin, 1,2-Propylendiamin, 1,3-Propylendiamin, 1,4-Diaminobutan, 1,5-Diaminopentan, 1,3-Diaminocyclohexan, Diaminomethylcyclohexan, Isophorondiamin oder Mischungen aus derartigen Diaminen und Triaminen wie Diethylentriamin und gegebenenfalls mit
D) einem primären oder sekundären, aliphatischen und/oder cycloaliphatischen Amin wie Diethylamin, Ethanolamin, Di-n-butylamin oder Cyclohexylamin, insbesondere Diethylamin, Ethanolamin, Di-n-butylamin,
wobei das molare Verhältnis Diamin zu Amin bezogen auf Aminogruppen von 100 zu 0 bis 100 zu 20, bevorzugt bis 100 zu 10 beträgt, mit einem molarem Aminüberschuß bezogen auf reaktive Isocyanateinheiten von 0 bis 25%, bevorzugt von 0 bis 15%, zur Reaktion gebracht wird.

2. Verfahren gemäß Anspruch 1, **dadurch gekennzeichnet, daß** als polymeres Diol
A) eines der allgemeinen Struktur HO-Q-OH,
wobei Q
ein Rest: -[(CH₂)ₙO]ₘ- ist
worin n für 4, m für eine Zahl von 10-70 steht,
eingesetzt wird.

3. Verfahren gemäß Anspruch 1 oder 2, **dadurch gekennzeichnet, daß** als polymeres Diol A) eines der allgemeinen Struktur HO-Q-OH,
wobei Q ein Polyesterrest ist hergestellt auf Basis von Adipin-, Sebacin-, Bernstein- oder Dodecandisäure mit Diolen der allgemeinen Struktur:
HO-A-OH,
wobei A für einen Rest: -[(CH₂)ᵣ(CR¹R²)_{q}(CH₂)ₛ]- steht,
worin r für eine Zahl von 1-5, q für eine Zahl von 0-1, s für eine Zahl von 0 bis 5
und R¹, R² unabhängig voneinander für -H oder -CH₃ steht,
eingesetzt wird.

4. Verfahren gemäß einem der Ansprüche 1 - 3, **dadurch gekennzeichnet, daß** als aliphatisches oder cycloaliphatisches Diisocyanat B) 1,4-Butandiisocyanat (BDI), 4,4'-Dicyclohexylmethandiisocyanat (H₁₂MDI), Isophorondiisocyanat (IPDI), oder ein Gemisch aus diesen Diisocyanaten eingesetzt wird.

5. Verfahren gemäß den Ansprüchen 1 - 4, **dadurch gekennzeichnet, daß** die Zumischung und Umsetzung des weiteren Diisocyanat B) mit der Reaktionsmischung in der zweiten Stufe bei einer Temperatur von 20°C bis 80°C erfolgt, so daß das gesamte Verhältnis NCO : OH von 1,7 bis 5,0 beträgt.

6. Verfahren gemäß den Ansprüchen 1 - 5, **dadurch gekennzeichnet, daß** die Kettenverlängerung in der dritten Stufe so durchgeführt wird, daß das molare Verhältnis von Isocyanatstrukturen zu zerewitinoffaktiven Wasserstoffatomen der Amine 1,25 zu 1 bis 1 zu 1,25 beträgt.

7. Verfahren zur Herstellung von Elastanfasern, -fäden oder -filamenten (nachfolgend vereinfacht nur Elastanfäden genannt) durch Verspinnen einer Polyurethanharnstofflösung nach dem Trockenspinnprozeß, **dadurch gekennzeichnet, daß** eine Spinnlösung enthaltend einen Polyurethanharnstoff erhältlich nach einem der Ansprüche 1 bis 6 durch eine Spinndüse in einen Spinnschacht eingebracht wird, das Lösungsmittel bei einer Schachttemperatur von 150°C bis 350°C, bevorzugt von 180°C bis 250°C, und einer Spinngastemperatur von 150°C bis 380°C, bevorzugt von 220°C bis 360°C entfernt wird, die verfestigten Fäden abgezogen, gegebenenfalls verstreckt, gegebenenfalls fixiert, mit einer Avivage versehen und auf Spulen aufgewickelt werden.

8. Verfahren zur Herstellung von Elastanfasern, -fäden oder -filamenten durch Verspinnen einer Polyurethanharnstofflösung nach dem Naßspinnprozeß in ein Fällbad unter Fadenbildung durch Koagulation, Entfernen des Lösungsmittels im Fällbad, Waschen der gebildeten Fäden, vorzugsweise in Wasser, Trocknen der Fäden, gegebenenfalls Verstrecken, gegebenenfalls Fixieren, Versehen mit einer Avivage und Aufwickeln auf Spulen, **dadurch gekennzeichnet, daß** eine Spinnlösung enthaltend einen Polyurethanharnstoff erhältlich aus dem Verfahren nach einem der Ansprüche 1 bis 6 verwendet wird.

9. Schmelzspinnverfahren zur Herstellung von Elastanfasern durch Herstellen einer Polyurethanharnstoffschmelze nach dem Präpolymerverfahren und Verspinnen der erhaltenen Polymerschmelze, **dadurch gekennzeichnet, daß** die Polyurethanharnstoffschmelze gemäß dem Verfahren nach einem der Ansprüche 1 bis 6 hergestellt wird, die Polymerschmelze nach ihrer Herstellung direkt versponnen wird, die entstehenden Elastanfasern gekühlt, gegebenenfalls verstreckt, mit einer Avivage versehen und aufgewickelt werden.

10. Verfahren zur Herstellung von Elastanfasern nach Anspruch 9, bei dem die nach der Kettenverlängerung erhaltene Polymerschmelze anstelle der direkten Verspinnung zunächst abgekühlt und granuliert wird und das resultierende Polymergranulat nach Wiederaufschmelzen durch Schmelzspinnen zu Elastanfäden verarbeitet wird.

11. Polyurethanharnstoffe aufgebaut auf Basis
A) eines polymeren Diols der allgemeinen Struktur HO-Q-OH,
wobei Q
ein Rest: -[(CH₂)ₙO]ₘ- oder -[(CH₂)ₚCH(CH₃)CH₂O]ₒ-
worin n für eine Zahl von 2-10, m für eine Zahl von 1-150,
o für eine Zahl von 1-150 und p für eine Zahl von 0-2 steht,
ein Polyesterrest hergestellt auf Basis von Adipin-, Sebacin-, Bernstein- und/oder Dodecandisäure mit Diolen der allgemeinen Struktur
HO-A-OH,
wobei A für einen Rest: -[(CH₂)ᵣ(CR¹R²)_{q}(CH₂)ₛ]- steht,
worin r für eine Zahl von 1-5, q für eine Zahl von 0-1,
s für eine Zahl von 0 bis 5
und R¹, R² unabhängig voneinander für -H oder -CH₃ steht,
wobei sowohl Gemische dieser Diole als auch ein einziges Diol eingesetzt werden können,
ein Polycaprolactonrest
oder einem Polycarbonatrest wie Poly(pentan-1,5-carbonat)diel, Poly(hexan-1,6-carbonat)diol
oder einer Mischung aus derartigen polymeren Diolen A) sowie
B) Isophorondiisocyanat (IPDI)
C) einem aliphatischen oder cycloaliphatischen Diamin aus der Gruppe:
Ethylendiamin, 1,2-Propylendiamin, 1,3-Propylendiamin, 1,4-Diaminobutan, 1,5-Diaminopentan, 1,3-Diaminocyclohexan, Diaminomethylcyclohexan, Isophorondiamin oder Mischungen aus derartigen Diaminen und Triaminen wie Diethylentriamin
und
D) gegebenenfalls einem primären oder sekundären, aliphatischen und/oder cycloaliphatischen Amin wie Diethylamin, Ethanolamin, Di-n-butylamin sowie Cyclohexylamin.

12. Elastanfäden erhältlich aus einem Verfahren gemäß einem der Ansprüche 7 bis 10.

13. Verwendung der Elastanfäden nach den Anspruch 12 zur Herstellung von Garnen insbesondere von Kombinationsgarnen mit anderen synthetischen und nicht synthetischen Fäden Fasern oder Filamenten und von textilen Flächengebilden, wie Gestricken, Geweben oder Gewirken.

## Claims

1. A multistage process for the production of polyurethaneureas by producing a prepolymer in solution or as a melt and subsequently chain extending the prepolymer in solution or as a melt, in which process in the first step the prepolymer (which is also known as an "isocyanate-capped glycol"), is produced from
A) a polymeric diol of the general structure
HO-Q-OH, wherein Q is
a residue: -[(CH₂)ₙO]ₘ- or -[(CH₂)ₚCH(CH₃)CH₂O]ₒ-
in which n denotes a number from 2-10, m a number from 1-150, o a number from 1-150 and
p a number from 0-2,
a polyester residue produced on the basis of adipic, sebacic, succinic or dodecanedioic acid or mixtures of said acids with diols of the general structure
HO-A-OH,
wherein A denotes a residue:
- [(CH₂)ᵣ(CR¹R²)_{q}(CH₂)ₛ]-,
in which r denotes a number from 1-5, q a number from 0-1, s a number from 0 to 5
and R¹, R² mutually independently denote -H or -CH₃,
wherein both mixtures of said diols and also a single diol may be used,
a polycaprolactone residue, preferably with a molecular weight of 500 to 5000,
or a polycarbonate residue, such as a poly(1,5-pentane carbonate) or poly(1,6-hexane carbonate) residue, preferably with a molecular weight of 500 to 5000,
or a mixture of such polymeric diols A) together with
B) an aliphatic or cycloaliphatic, in particular cycloaliphatic diisocyanate, such as 1,6-hexane diisocyanate (HDI), 1,4-butane diisocyanate (BDI), 1,4-cyclohexyl diisocyanate (CDI), 4,4'-dicyclohexylmethane diisocyanate (H₁₂MDI), isophorone diisocyanate (IPDI), tetramethylxylylene diisocyanate (TMXDI) or dimeryl diisocyanate (DDI) or mixtures of said diisocyanates
with an NCO:OH ratio of 1.3-3.0, preferably of 1.5-2.3
either in a solvent such as dimethylformamide (DMF), dimethylacetamide (DMAc) or N-methylpyrrolidine (NMP) or another dipolar aprotic solvent
or as a melt,
by heating the components, once they have been mixed, with stirring for a period of 0.5 to 5 hours, preferably of 1 to 5 hours, to 30°C to 100°C, preferably 40°C to 80°C, when using solvents, or to 60°C to 200°C, preferably 80°C to 150°C, when performing a melt reaction,
thereafter in a second step incorporating further diisocyanate B) into the reaction mixture at a temperature of 0°C to 100°C, such that the overall NCO:OH ratio is 1.7-6.0,
and in a third step performing chain extension
either in the presence of a solvent such as dimethylformamide (DMF), dimethylacetamide (DMAc) or N-methylpyrrolidine (NMP) or other dipolar aprotic solvents both batchwise with stirring and continuously with thorough mixing at a temperature of -20°C to 100°C, preferably of 0°C to 80°C,
or in a melt at a temperature of 100°C to 250°C by reaction with
C) an aliphatic or cycloaliphatic, in particular cycloaliphatic diamine from the group: ethylenediamine, 1,2-propylenediamine, 1,3-propylenediamine, 1,4-diaminobutane, 1,5-diaminopentane, 1,3-diaminocyclohexane, diaminomethylcyclohexane, isophoronediamine or mixtures of such diamines and triamines, such as diethylenetriamine, and optionally with
D) a primary or secondary, aliphatic and/or cycloaliphatic amine such as diethylamine, ethanolamine, di-n-butylamine or cyclohexylamine, in particular diethylamine, ethanolamine, di-n-butylamine,
wherein the molar ratio of diamine to amine, relative to amino groups, is from 100:0 to 100:20, preferably to 100:10, with a molar amine excess relative to reactive isocyanate units of 0 to 25%, preferably of 0 to 15%.

2. A process according to claim 1, **characterised in that** the polymeric diol used is
A) of the general structure HO-Q-OH,
wherein Q
is a residue: - [(CH₂)ₙO]ₘ-
in which n denotes 4, m a number from 10-70.

3. A process according to claim 1 or 2, **characterised in that** the polymeric diol A) used is of the general structure HO-Q-OH,
wherein Q is a polyester residue produced on the basis of adipic, sebacic, succinic or dodecanedioic acid with diols of the general structure:
HO-A-OH,
wherein A denotes a residue:
-[(CH₂)ᵣ(CR¹R²)_{q}(CH₂)ₛ]-,
in which r denotes a number from 1-5, q a number from 0-1, s a number from 0-5
and R¹, R² mutually independently denote -H or -CH₃.

4. A process according to one of claims 1-3, **characterised in that** the aliphatic or cycloaliphatic diisocyanate B) used is 1,4-butane diisocyanate (BDI), 4,4'-dicyclohexylmethane diisocyanate (H₁₂MDI), isophorone diisocyanate (IPDI) or a mixture of said diisocyanates.

5. A process according to one of claims 1-4, **characterised in that** the further diisocyanate B) is incorporated into and reacted with the reaction mixture in the second stage at a temperature of 20°C to 80°C, in such a manner that the overall NCO:OH ratio is 1.7-5.0.

6. A process according to one of claims 1-5, **characterised in that** chain extension is performed in the third stage in such a manner that the molar ratio of isocyanate structures to Zerewitinoff-active hydrogen atoms of the amines is 1.25:1-1:1.25.

7. A process for the production of elastane fibres or filaments (hereinafter denoted simply "elastane fibres") by spinning a polyurethaneurea solution by the dry spinning process, **characterised in that** a spinning solution containing a polyurethaneurea obtainable according to one of claims 1 to 6 is introduced through a spinneret into a spinning cabinet, the solvent is removed at a cabinet temperature of 150°C to 350°C, preferably of 180°C to 250°C, and a spinning gas temperature of 150°C to 380°C, preferably of 220°C to 360°C, the solidified fibres are drawn off, optionally stretched, optionally set, provided with a finish and wound onto reels.

8. A process for the production of elastane fibres or filaments by spinning a polyurethaneurea solution by the wet spinning process in a precipitating bath with fibre formation by coagulation, removal of the solvent in the precipitating bath, washing of the formed fibres, preferably in water, drying of the fibres, optional stretching, optional setting, provision with a finish and winding onto reels, **characterised in that** a spinning solution containing a polyurethaneurea obtainable from the process according to one of claims 1 to 6 is used.

9. A melt spinning process for the production of elastane fibres by producing a polyurethaneurea melt by the prepolymer process and spinning the resultant polymer melt, **characterised in that** the polyurethaneurea melt is produced using the process according to one of claims 1 to 6, the polymer melt is directly spun after the production thereof, the resultant elastane fibres are cooled, optionally stretched, provided with a finish and wound up.

10. A process for the production of elastane fibres according to claim 9, in which the polymer melt obtained after chain extension, instead of being directly spun, is first cooled and pelletised and the resultant polymer pellets, once remelted, are converted into elastane fibres by melt spinning.

11. Polyurethaneureas synthesised on the basis of
A) a polymeric diol of the general structure
HO-Q-OH,
wherein Q is
a residue: -[(CH₂)ₙO]ₘ- or -[(CH₂)ₚCH(CH₃)CH₂O]ₒ-
in which n denotes a number from 2-10, m a number from 1-150, o a number from 1-150 and
p a number from 0-2,
a polyester residue produced on the basis of adipic, sebacic, succinic or dodecanedioic acid with diols of the general structure
HO-A-OH,
wherein A denotes a residue:
-[(CH₂)ᵣ(CR¹R²)_{q}(CH₂)ₛ]-,
in which r denotes a number from 1-5, q a number from 0-1, s a number from 0 to 5
and R¹, R² mutually independently denote -H
or -CH₃,
wherein both mixtures of said diols and also a single diol may be used,
a polycaprolactone residue,
or a polycarbonate residue, such as a poly(1,5-pentane carbonate) or poly(1,6-hexane carbonate) residue, or a mixture of such polymeric diols A) together with
B) isophorone diisocyanate (IPDI)
C) an aliphatic or cycloaliphatic diamine from the group:
ethylenediamine, 1,2-propylenediamine, 1,3-propylenediamine, 1,4-diaminobutane, 1,5-diaminopentane, 1,3-diaminocyclohexane, diaminomethylcyclohexane, isophoronediamine or mixtures of such diamines and triamines, such as diethylenetriamine,
and
D) optionally a primary or secondary, aliphatic and/or cycloaliphatic amine such as diethylamine, ethanolamine, di-n-butylamine and cyclohexylamine.

12. Elastane fibres obtainable from a process according to one of claims 7 to 10.

13. Use of the elastane fibres according to claim 12 for the production of yarns, in particular of combination yarns with other synthetic and non-synthetic fibres or filaments and of textile fabrics, such as knitted, woven or warp knitted fabrics.

## Revendications

1. Procédé en plusieurs étapes pour la préparation de matériaux polyuréthane-urée par préparation de prépolymères en solution ou en masse fondue et allongement de chaîne postérieur du prépolymère en solution ou en masse fondue, selon lequel dans la première étape on prépare le prépolymère (qui est également caractérisé comme étant un "glycol coiffé par un isocyanate" à partir de
A) un diol polymère de structure générale HO-Q-OH,
où Q est un radical : -[(CH₂)ₙO]ₘ- ou -[(CH₂)ₚCH(CH₃)CH₂O]ₒ-
dans lequel n est un nombre entier de 2 - 10, m est un nombre entier de 1 - 150, o est un nombre entier de 1 - 150 et p est un nombre entier de 0 - 2,
un radical polyester préparé à base d'acide adipique, sébacique, succinique ou dodécanedioïque ou des mélanges de ces acides avec des diols de structure générale
HO-A-OH,
où A est un radical : -[(CH₂)ᵣ(CR¹R²)_{q}(CH₂)ₛ]-,
dans lequel r est un nombre entier de 1 - 5, q est un nombre entier de 0 - 1, s est un nombre entier de 0 - 5
et R¹ et R² indépendamment l'un de l'autre sont -H ou -CH₃,
où aussi bien le mélange de ces diols comme également un diol unique peut être introduit,
un radical polycaprolactone, de préférence avec une masse moléculaire de 500 à 5000,
ou un radical polycarbonate comme un radical poly(pentan-1,5-carbonate) ou poly(hexan-1,6-carbonate), de préférence avec une masse moléculaire de 500 à 5000,
ou un mélange de ces diols polymères A) ainsi que
B) un diisocyanate aliphatique ou cycloaliphatique, en particulier cycloaliphatique, comme le 1,6-hexanediisocyanate (HDI), le 1,4-butanediisocyanate (BDI), le 1,4-cyclohexyldiisocyanate (CDI). le 4,4'-dicyclohexylméthanediisocyanate (H₁₂MDI), l'isophorone-diisocyanate (IPDI), le tétraméthylxylylènediisocyanate (TMXDI) ou le diméryldiisocyanate (DDI) ou des mélanges de ces diisocyanates avec un rapport NCO : OH- de 1,3 à 3,0, de préférence 1,5 à 2,3 soit dans un solvant comme le diméthylformamide (DMF), le diméthylacétamide (DMAc) ou la N-méthylpyrrolidine (NMP) ou un autre solvant aprotique dipolaire
ou dans la masse fondue,
dans lequel les composants après mélange sous agitation pour une durée de 0,5 à 5 heures, de préférence 1 à 5 heures, en utilisant des solvants sont chauffés de 30°C à 100°C, de préférence de 40°C à 80°C respectivement en effectuant une réaction en fusion de 60°C à 200°C, de préférence de 80°C 150°C,
à la suite de cela est mélangé en une deuxième étape à une température de 0°C à 100°C un autre diisocyanate B) au mélange réactionnel, de manière que le rapport total NCO : OH soit de 1,7 à 6,0,
et dans une troisième étape on effectue l'allongement de chaîne soit en présence d'un solvant comme le diméthylformamide (DMF), le diméthylacétamide (DMAc) ou la N-méthylpyrrolidine (NMP) ou d'autres solvants aprotiques dipolaires ainsi qu'en discontinu sous agitation comme également en continu sous mélange intime soigneux à une température de -20°C à 100°C, de préférence de 0°C à 80°C
ou dans la masse en fusion à une température de 100°C à 250°C avec
C) une diamine aliphatique ou cycloaliphatique, en particulier cycloaliphatique du groupe : l'éthylènediamine, la 1,2-propylènediamine, la 1,3-propylènediamine, le 1,4-diaminobutane, le 1,5-diaminopentane, le 1,3-diaminocyclohexane, le diaminométhylcyclohexane, l'isophoronediamine ou des mélanges de ces diamines et triamines comme la diéthylènetriamine et éventuellement avec
D) une amine primaire ou secondaire, aliphatique et/ou cycloaliphatique comme la diéthylamine, l'éthanolamine, la di-n-butylamine ou la cyclohexylamine, en particulier la diéthylamine, l'éthanolamine, la di-n-butylamine,
où le rapport molaire de la diamine à l'amine rapporté aux groupes amino est de 100 à 0 jusqu'à 100 à 20, de préférence jusqu'à 100 à 10, avec un excès d'amine molaire rapporté aux unités isocyanates réactives de 0 à 25 %, de préférence 0 à 15 %.

2. Procédé selon la revendication 1, **caractérisé en ce qu'**on utilise comme polymère diol
A) un de structure générale HO-Q-OH,
où Q est un radical : -[(CH₂)ₙO]ₘ-
dans lequel n vaut 4, m est un nombre entier de 10 - 70.

3. Procédé selon la revendication 1, **caractérisé en ce qu'**on utilise comme diol polymère A) un de structure générale HO-Q-OH,
où Q un radical polyester préparé à base d'acide adipique, sébacique, succinique ou dodécanedioïque avec des diols de structure générale
HO-A-OH,
où A est un radical : -[(CH₂)ᵣ(CR¹R²)_{q}(CH₂)ₛ]-,
dans lequel r est un nombre entier de 1 - 5, q est un nombre entier de 0 - 1, s est un nombre entier de 0 - 5
et R¹ et R² indépendamment l'un de l'autre sont -H ou -CH₃.

4. Procédé selon l'une des revendications 1 à 3, **caractérisé en ce qu'**on utilise comme diisocyanate aliphatique ou cycloaliphatique B) le 1,4-butanediisocyanate (BDI), le 4,4'-dicyclohexylméthanediisocyanate (H₁₂MDI), l'isophoronediisocyanate (IPDI), ou un mélange de ces diisocyanates.

5. Procédé selon les revendications 1 à 4, **caractérisé en ce que** le mélange et la réaction de l'autre diisocyanate B) avec le mélange réactionnel dans la deuxième étape est effectué à une température de 20°C à 80°C, de manière que le rapport NCO : OH soit de 1,7 à 5,0.

6. Procédé selon les revendications 1 à 5, **caractérisé en ce qu'**on effectue l'allongement de chaîne dans la troisième étape de manière que le rapport molaire des structures d'isocyanate aux atomes d'hydrogène actifs zerewitinoff de l'amine soit de 1,25 à 1 jusqu'à 1 à 1,25.

7. Procédé de préparation de fibres, fils ou filaments d'élasthanne (dans la suite appelés seulement pour simplifier fils d'élasthanne) par filage d'une solution de polyuréthane-urée selon le procédé de filage à sec, **caractérisé en ce qu'**une solution de filage contenant une polyuréthane-urée pouvant être obtenue par le procédé selon l'une des revendications 1 à 6 est amenée par une filière dans une cuve de filière, la solution est éliminée à une température de cuve de 150°C à 350°C, de préférence de 180°C à 250°C, et une température de gaz de filage de 150°C à 380°C, de préférence 220°C à 360°C, les fils préparés sont tirés, éventuellement étirés, éventuellement fixés, dotés d'un avivage et enroulés sur des bobines.

8. Procédé de préparation de fibres, fils ou filaments d'élasthanne par filage d'une solution de polyuréthane-urée selon le procédé de filage humide dans un bain précipitant sous formation de fils par coagulation, élimination du solvant dans le bain précipitant, lavage des fils formés, de préférence dans l'eau, séchage des fils, éventuellement étirage, éventuellement fixation, fourniture d'un avivage et enroulement sur des bobines, **caractérisé en ce qu'**on utilise une solution de filage contenant une polyuréthane-urée pouvant être obtenue par un procédé selon l'une des revendications 1 à 6.

9. Procédé de filage à l'état fondu pour la préparation de fibres d'élasthanne pour la préparation d'une masse fondue de polyuréthane-urée selon le procédé de prépolymérisation et le filage de masse fondue polymère obtenue, **caractérisé en ce que** la masse de polyuréthane-urée est préparée selon le procédé de préparation selon l'une des revendications 1 à 6, la masse fondue de polymère est filée directement après sa préparation, les fils d'élasthanne correspondants sont refroidis, éventuellement étirés, pourvus d'un avivage et enroulés.

10. Procédé pour la préparation de fibres d'élasthanne selon la revendication 9, dans lequel la masse fondue polymère obtenue après l'allongement de chaîne, à la place du filage direct, est d'abord refroidie et granulée et on transforme les granulés de polymère résultants après nouvelle fusion par filage à l'état fondu en fils d'élasthanne.

11. Polyuréthane-urées formées à base de
A) un diol polymère de structure générale HO-Q-OH,
où Q
est un radical : -[(CH₂)ₙO]ₘ- ou -[(CH₂)ₚCH(CH₃)CH₂O]ₒ-
dans lequel n est un nombre entier de 2 - 10, m est un nombre entier de 1 - 150, o est un nombre entier de 1 - 150 et p est un nombre entier de 0 - 2,
un radical polyester préparé à base d'acide adipique, sébacique, succinique et/ou dodécanedioïque avec des diols de structure générale
HO-A-OH,
où A est un radical : -[(CH₂)ᵣ(CR¹R²)_{q}(CH₂)ₛ]-,
dans lequel r est un nombre entier de 1 - 5, q est un nombre entier de 0 - 1, s est un nombre entier de 0 à 5
et R¹, R² indépendamment l'un de l'autre sont -H ou -CH₃,
où également des mélanges de ces diols comme également un diol unique peuvent être utilisés,
un radical polycaprolactone
ou un radical polycarbonate comme le poly(pentan-1,5-carbonate)diol, le poly(hexan-1,6-carbonate)diol
ou un mélange de tels diols polymères A) ainsi que
B) l'isophoronediisocyanate (IPDI)
C) une diamine aliphatique ou cycloaliphatique du groupe: l'éthylènediamine, la 1,2-propylènediamine, la 1,3-propylènediamine, le 1,4-diaminobutane, le 1,5-diaminopentane, le 1,3-diaminocyclohexane, le diaminométhylcyclohexane, l'isophoronediamine ou des mélanges de telles diamines et triamines comme la diéthylènetriamine
et
D) éventuellement une amine aliphatique et/ou cycloaliphatique primaire ou secondaire, comme la diéthylamine, l'éthanolamine, la di-n-butylamine ainsi que la cyclohexylamine.

12. Fils d'élasthanne pouvant être obtenus par un procédé selon l'une des revendications 7 à 10.

13. Utilisation des fils d'élasthanne selon la revendication 12 pour la fabrication de fils en particulier de fils de combinaison avec d'autres fils, fibres ou filaments synthétiques et non synthétiques et de produits plats textiles, comme des tricots, des tissés ou des tissus.
